# EUROPÄISCHE PATENTSCHRIFT

(11) **EP 0 987 363 B1**
(45) Veröffentlichungstag und Bekanntmachung des Hinweises auf die Patenterteilung: **17.04.2002**
(21) Anmeldenummer: 99116135.7
(22) Anmeldetag: 19.08.1999
(51) Int. Cl.: D06N 3/00, D06N 3/04, F41H 1/00, F41H 5/02, F41H 5/04, B32B 27/12, B32B 5/16, B32B 5/26

(54) **Verwendung von Polymerpulver zur Herstellung von beschussfesten Fasermaterialien**
Use of polymer powder for the production of ballistic resistant fibre materials
Utilisation de poudre polymère pour la fabrication de matériaux fibreux anti-balistiques

(30) Priorität: 17.09.1998 DE 19842661
(43) Veröffentlichungstag der Anmeldung: 22.03.2000
(73) Patentinhaber: Wacker-Chemie GmbH, 81737 München (DE)
(72) Erfinder: Hashemzadeh, Abdulmajid, Dr., 84508 Burgkirchen (DE); Kohlhammer, Klaus, Dr., 84533 Marktl (DE)
(74) Vertreter: Schuderer, Michael, Dr.

(56) Entgegenhaltungen:
- EP-A- 0 169 432
- EP-A- 0 597 165
- DE-A- 2 927 653

## Beschreibung

Die Erfindung betrifft die Verwendung von vernetzbaren Polymerpulvern zur Herstellung von beschussfesten Fasermaterialien.

Es ist bekannt zur Herstellung von Schutzpanzerungen Materialien auf der Basis von textilen Flächenmaterialien einzusetzen, welche aus Aramidfasern hergestellt sind. Beispiele hierfür sind die in der DE-A 3627485 beschriebenen Bodenbeläge für die Fahrzeugböden von Sicherheitsfahrzeugen. Weitere Beispiele sind Schutzverkleidungen für Fahrzeugtüren, wie sie in der DE-A 4236234 beschrieben werden. Für die genannten Zwecke werden mehrere Lagen von Aramidfaser-Gewebe mit polymeren Bindemitteln zu mehrlagigen Geweben oder zu starren Platten verbunden. Im allgemeinen werden die einzelnen Gewebelagen dazu mit Bindemittellösungen, beispielsweise Phenolharz-Lösungen, getränkt.

Aus der DE-A 3426458 ist allerdings bekannt, dass bei dieser Vorgehensweise die Aramidfasern durchtränkt werden und deshalb deutlich schlechtere Halteleistungen resultieren. Es wird daher vorgeschlagen vernetzbare, thermoplastische Polymere in hochviskoser Lösung bzw. Dispersion oder als Schmelzfaser einzusetzen, um die Imprägnierung der Faser zu vermeiden. Schmelzfasern haben den Nachteil, dass diese bereits bei der Herstellung der zu verfestigenden Gewebe beigemischt werden müssen und mit Schmelzfasern keine harten Formkörper zugänglich sind. Die Halteleistung bei der Bindung mit Lösungen oder Dispersionen konnte nicht befriedigen.

Vor diesem Hintergrund bestand die Aufgabe, beschussfeste Fasermaterialien zur Verfügung zu stellen, welche sich gegenüber dem Stand der Technik durch verbesserte Halteleistung auszeichnen.

Überraschenderweise wurde festgestellt, dass mit vernetzbaren, thermoplastischen Polymerisaten, welche in Pulverform auf die Aramidfasern aufgetragen werden, höhere Beschussfestigkeiten erhalten werden.

Gegenstand der Erfindung ist die Verwendung von vernetzbaren Polymerpulvern zur Herstellung von beschussfesten Fasermaterialien, dadurch gekennzeichnet, dass die textilen Flächengebilde mittels pulverförmiger, vernetzbarer Mischpolymerisate von ethylenisch ungesättigten Monomeren welche eine Glasübergangstemperatur Tg oder einen Schmelzpunkt von ≥ 40°C und eine Schmelzviskosität von ≥ 2000 mPas bei 160°C aufweisen, unter Erhalt von partikulär auf der Faser verteilten Bindemittelteilchen verfestigt werden.

Geeignete Mischpolymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten wie Styrol, Olefine wie Ethylen und Butadien sowie Vinylchlorid. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9^{R} oder Veo-Va10^{R} (Handelsnamen der Fa. Shell). Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Zur Vernetzung enthalten die Mischpolymerisate noch vernetzbare, funktionelle Comonomere in einem Anteil von 0.01 bis 25 Gew%, vorzugsweise 0.1 bis 15 Gew%, insbesondere 0.2 bis 6.0 Gew%, bezogen auf das Gesamtgewicht des Mischpolymerisats.

Geeignete Comonomere sind beispielsweise solche welche zu selbstvernetzenden Polymerisaten führen: Kondensierbare Comonomereinheiten aus der Gruppe der N-Methylol(meth)acrylamide und deren N-(Alkoxymethyl)- und (N-Acyloxymethyl)-Derivate, oder aus der Gruppe der gamma-Acryl- und gamma-Methacryloxypropyltrialkoxysilane und Vinyltrialkoxysilane. Bevorzugte N-Methylol(meth)acrylamide und deren N-(Alkoxymethyl)- und (N-Acyloxymethyl)-Derivate sind N-Methylolacrylamid, N-Methylolmethacrylamid, N-(Isobutoxymethyl)acrylamid, N-(n-Butoxymethyl)acrylamid. Bevorzugte silanhaltige Comonomereinheiten sind Vinyltriethoxysilan, gamma-Methacryloxypropyltriethoxysilan und Trisacetoxyvinylsilan.

Geeignet sind auch funktionelle Comonomere welche mittels eines externen Vernetzers vernetzt werden. Beispielsweise ethylenisch ungesättigte, carboxylgruppenhaltige Comonomere aus der Gruppe der ethylenisch ungesättigten Mono- und Dicarbonsäuren wie Acrylsäure, Methacrylsäure, Maleinsäure, Fumarsäure, Itaconsäure, Crotonsäure. Die carboxylfunktionellen Copolymerisate können mit epoxidfunktionellen Vernetzern vernetzt werden. Weitere Beispiele sind ethylenisch ungesättigte, hydroxygruppenhaltige Comonomere aus der Gruppe der Hydroxyalkylacrylate und der Hydroxyalkylmethacrylate wie Hydroxyethylacrylat, Hydroxyethylmethacrylat, Hydroxypropylacrylat und Hydroxypropylmethacrylat. Die hydroxyfunktionellen Copolymerisate können mit isocyanatfunktionellen Vernetzern vernetzt werden.

Bevorzugte Mischpolymerisate sind Vinylacetat/Vinylchlorid-, Vinylacetat/VeoVa9^{R}-, Methylmethacrylat/Butylacrylat-, Styrol/Butadien- und Styrol/Butylacrylat-Mischpolymerisate, welche jeweils 0.01 bis 25 Gew%, ein oder mehrere Monomereinheiten aus der Gruppe umfassend N-Methylolacrylamid, N-Methylolmethacrylamid, N-(Isobutoxymethyl)acrylamid, N-(n-Butoxymethyl)acrylamid, Vinyltriethoxysilan, gamma-Methacryloxypropyltriethoxysilan, Trisacetoxyvinylsilan, Acrylsäure, Methacrylsäure, Maleinsäure, Fumarsäure, Itaconsäure, Crotonsäure, Hydroxyethylacrylat, Hydroxyethylmethacrylat, Hydroxypropylacrylat enthalten, und deren Zusammensetzung so gewählt wird, dass die obengenannten Glastemperaturen Tg bzw. Schmelzpunkte resultieren.

Bevorzugt werden Glasübergangstemperaturen von 60°C bis 160°C, wobei die Glasübergangstemperatur mittels Differential Scanning Calorimetry (DSC) ermittelt werden kann oder mittels der Fox-Gleichung vorausberechnet werden kann. Die bevorzugte Schmelzviskosität beträgt 2000 bis 3000 mPas, wobei die Schmelzviskositäten jeweils bei 160°C bestimmt werden.

Als externe Vernetzer geeignet sind Verbindungen, welche zwei oder mehr Epoxid- oder Isocyanatgruppen aufweisen. Beispiele für geeignete Epoxidvernetzer sind solche vom Bisphenol-A-Typ, das heißt Kondensationsprodukte von Bisphenol-A und Epichlorhydrin oder Methylepichlorhydrin. Derartige Epoxidvernetzer sind im Handel, beispielsweise unter den Handelsnamen Epicote oder Eurepox, erhältlich. Geeignete Diisocyanate sind ebenfalls gängige Handelsprodukte, beispielsweise m-Tetramethylxylen-Diisocyanat (TMXDI), Methylendiphenyl-Diisocyanat (MDI). Der Gehalt an Vernetzer beträgt im allgemeinen von 0.1 bis 25 Gew%, vorzugsweise von 4 bis 12 Gew%, bezogen auf das pulverförmige Mischpolymerisat.

Besonders bevorzugt werden Vinylacetat/Vinylchlorid-, Vinylacetat/VeoVa9^{R}-, Methylmethacrylat/Butylacrylat-, Styrol/Butadien- und Styrol/Butylacrylat-Mischpolymerisate, welche jeweils 0.01 bis 25 Gew%, ein oder mehrere Monomereinheiten aus der Gruppe umfassend Acrylsäure, Methacrylsäure, Maleinsäure, Fumarsäure, Itaconsäure, Crotonsäure, Hydroxyethylacrylat, Hydroxyethylmethacrylat, Hydroxypropylacrylat enthalten, zusammen mit Epoxidvernetzer vom Bisphenol-A-Typ eingesetzt

Die Vernetzung kann beispielsweise mittels Katalysatoren beschleunigt werden, welche sich von Triphenylphosphonium-Halogeniden oder quarternären Ammoniumverbindungen ableiten. Die genannten Verbindungen sind im Handel erhältlich und werden vorzugsweise in Mengen von 0.1 bis 5 Gew%, bezogen auf das pulverförmige Mischpolymerisat, eingesetzt.

Die Herstellung der vernetzbaren Mischpolymerisate und der vernetzbaren Pulvermischung erfolgt in an sich bekannter Weise, im allgemeinen mittels Emulsionspolymerisation, gegebenfalls Zumischen des externen Vernetzers sowie gegebenenfalls des Vernetzungskatalysators und anschließender Trocknung der erhaltenen Polymerdispersion. In einer anderen Ausführungsform zur Herstellung der vernetzbaren Pulvermischung wird das Mischpolymerisat mittels wässriger Emulsionspolymerisation hergestellt, in an sich bekannter Weise zu einem Pulver getrocknet und gegebenenfalls der externe Vernetzer zugemischt. Beispielsweise wie in der DE-A 19733133 und der WO-A 94/20661 beschrieben, deren diesbezügliche Offenbarungen Teil der vorliegenden Anmeldung sein sollen.

Zur Faserbindung wird das Pulver im allgemeinen in einer Menge von 5 bis 200 g/m² eingesetzt, vorzugsweise von 5 bis 100 g/m², insbesondere jedoch von 10 bis 50 g/m² und die Flächengebilde bei einer Temperatur von 100°C bis 250°C und gegebenenfalls unter Druck, im allgemeinen von 0.5 bis 20 bar, verfestigt. Geeignete Fasern für die Herstellung beschussfester Materialien sind dem Fachmann bekannt. Im allgemeinen werden Polyamidfasern, vorzugsweise aromatische Polyamidfasern wie Aramidfasern eingesetzt. Geeignet sind aber auch Carbonfasern, Glasfasern sowie Aramidfasern enthaltende Mischfasern. Die Fasern können in Form von gewebten Textilien oder in Form von Nonwovens wie Gelegen oder Gewirken eingesetzt werden. Die Nonwovens können gegebenenfalls mechanisch vorverfestigt, beispielsweise genadelt, sein.

Zur Herstellung der Fasergebilde kann dabei so vorgegangen werden, dass die Fasern mit dem Pulver vermischt werden und das Gemisch aus Faser und Pulver vor der Verfestigung ausgelegt wird. Es kann auch so vorgegangen werden, dass vor der Verfestigung die Fasern flächenhaft ausgebreitet werden und anschliessend der Pulverbinder in das ausgelegte Fasermaterial eingestreut wird. Anschliessend wird das Fasermaterial durch Anwendung von Temperatur und gegebenenfalls Druck gebunden. In einer möglichen Ausführungsform können die Fasergebilde nach dem Vermischen mit dem Pulver oder nach dem Einstreuen des Pulvers mit Wasser oder Heissdampf behandelt werden.

Zur Herstellung von beschussfesten Materialien werden im allgemeinen mehrere Lagen, gegebenenfalls bis zu 30 Lagen, der mit dem Pulver verfestigten Fasergebilde oder der gewebte Fasergebilde miteinander verbunden. Die Laminierung kann dabei so erfolgen, dass mit Pulver vorgebundene Fasergebilde mittels Behandlung bei erhöhter Temperatur und gegebenenfalls erhöhtem Druck miteinander laminiert werden. Es kann auch so vorgegangen werden, dass mehrere Lagen Gewebe durch Einstreuen von Pulverbinder zwischen die Gewebelagen und anschliessender Temperaturbehandlung und gegebenenfalls Druckbehandlung miteinander verbunden werden. Mit dem Laminierverfahren können aber auch Verbundplatten aus den mit Pulverbinder verfestigten Fasergebilden oder Gewebe mit Stahlplatten oder Keramikplatten hergestellt werden.

Die so erhältlichen beschussfesten Fasermaterialien eignen sich zur Herstellung von Schutzmatten oder zur Herstellung von Formkörpern für die innenseitige und aussenseitige Panzerung von Land-, Luft- und Seefahrzeugen. Weitere Anwendungsmöglichkeiten sind die Herstellung von Schutzpanzern und Schutzhelmen für den Personenschutz.

Die nachfolgenden Beispiele dienen der weiteren Erläuterung der Erfindung.

### Beispiel 1:

Auf 12 Lagen eines Aramidfasergewebes (Köperbindung) mit einer Fläche von 30 mm x 30 mm wurde jeweils ein Pulverbindergemisch aus 98 Gew% eines Styrol-Butylacrylat-Mischpolymeren mit 5 % Acrylsäureanteil (Tg = 60°C; Schmelzviskosität > 2000 mPas) und 5 Gew% Epoxidvernetzer, bezogen auf Mischpolymer, in einer Menge von 30 g/m² mit einer elektrostatischen Pulverpistole aufgetragen. Die so behandelten Gewebe wurden 2 Minuten bei 170°C behandelt, um das Pulver an die Faser anzusintern. Anschliessend wurden die 12 Lagen aufeinandergestapelt und bei 180°C und einem Druck von 1 bar zusammengepresst. Es wurde eine starre Aramidplatte mit einer Schichtdicke von etwa 6 mm erhalten.

### Vergleichsbeispiel 2:

12 Lagen eines Aramidfasergewebes (Köperbindung) mit einer Fläche von 30 mm x 30 mm wurden jeweils mit einer Phenol-Formaldehyd-Harzlösung (Bakelite-Harz 9708 TP, Handelsname der Bakelite AG) in einer Menge von 30 g/m² getränkt. Die imprägnierten Gewebe wurden anschliessend aufeinander geschichtet und bei einer Temperatur von 180°C und einem Pressdruck von 1 bar zusammengepresst. Es wurde ebenfalls eine starre Aramidplatte mit einer Schichtdicke von etwa 6 mm erhalten.

### Vergleichsbeispiel 3:

12 Lagen eines Aramidfasergewebes (Köperbindung) mit einer Fläche von 30 mm x 30 mm wurden jeweils mit einer 50 %-igen wässrigen Dispersion eines Styrol-Butylacrylat-Mischpolymeren mit 5 % Acrylsäureanteil und 5 Gew% Epoxidvernetzer in einer Menge von 30 g/m² beschichtet. Die beschichteten Gewebe wurden anschliessend aufeinander geschichtet und bei einer Temperatur von 180°C und einem Pressdruck von 1 bar zusammengepresst. Es wurde ebenfalls eine starre Aramidplatte mit einer Schichtdikke von etwa 6 mm erhalten.

### Untersuchungen zur Beschussfestigkeit:

Zur Testung der Beschussfestigkeit wurden die Laminate aus 10 m Entfernung mit Weichkernmunition beschossen. Während das Laminat aus Beispiel 1 dem Beschuss standhielt und kein Durchschuss erhalten wurde, wurden mit den Laminaten aus den Vergleichsbeispielen 2 und 3 nur Durchschüsse erhalten.

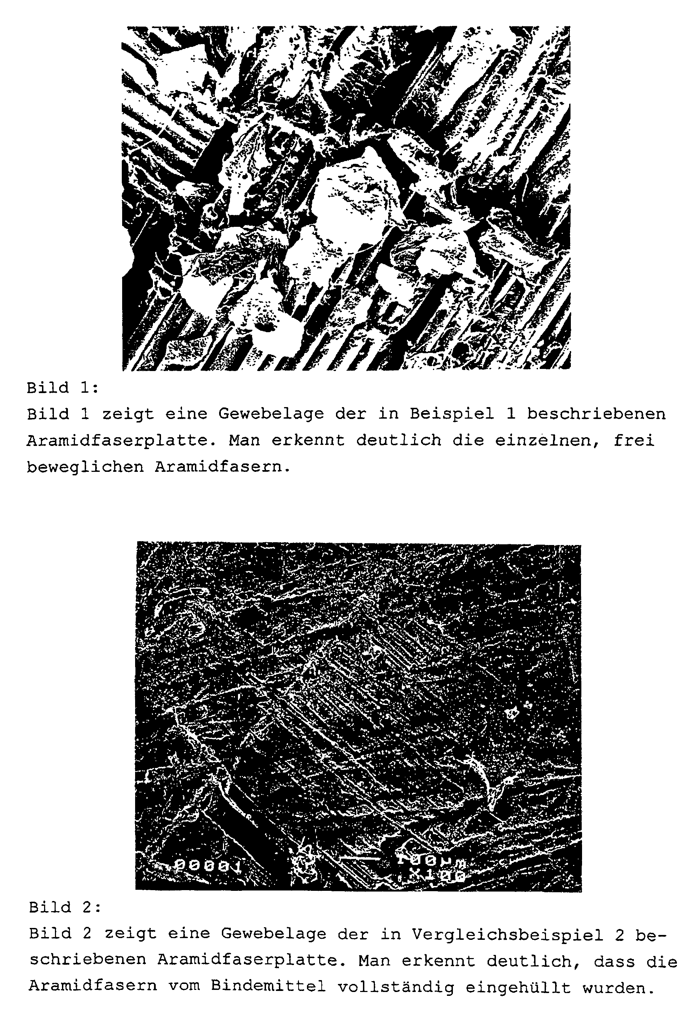

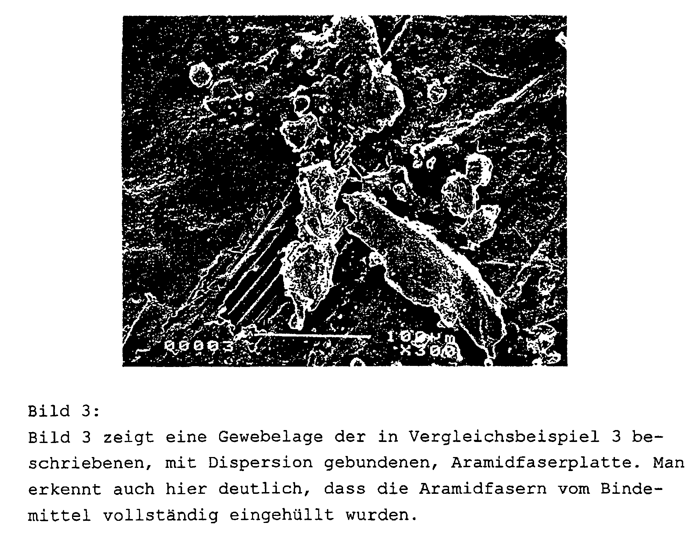

Proben der Platten gemäss Beispiel 1 und Vergleichsbeispiel 2 und 3 wurden rasterelektronenmikroskopisch untersucht. Bild 1 zeigt die gemäss Beispiel 1 erhaltene Platte mit ungleichmässig auf der Faser verteilten Bindemitteiteilchen. Bild 2 und 3 zeigen die gemäss Vergleichsbeispiel 2 und 3 erhaltenen Platten mit den vollständig mit Bindemittel umhüllten Fasern.

## Patentansprüche

1. Verwendung von vernetzbaren Polymerpulvern zur Herstellung von beschussfesten Fasermaterialien, **dadurch gekennzeichnet, dass** die textilen Flächengebilde mittels pulverförmiger, vernetzbarer Mischpolymerisate von ethylenisch ungesättigten Monomeren, welche eine Glasübergangstemperatur Tg oder einen Schmelzpunkt von ≥ 40°C und eine Schmelzviskosität von ≥ 2000 mPas bei 160°C aufweisen, unter Erhalt von partikulär auf der Faser verteilten Bindemittelteilchen verfestigt werden.

2. Verwendung nach Anspruch 1, **dadurch gekennzeichnet, dass** als Mischpolymerisat solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten wie Styrol, Olefine wie Ethylen und Butadien sowie Vinylchlorid, welche jeweils 0.01 bis 25 Gew%, bezogen auf das Gesamtgewicht des Mischpolymerisats, vernetzbare, funktionelle Comonomere enthalten, eingesetzt werden.

3. Verwendung nach Anspruch 1 oder 2, **dadurch gekennzeichnet, dass** die vernetzbaren Mischpolymerisate funktionelle Comonomere aus der Gruppe umfassend kondensierbare Comonomereinheiten wie N-Methylol(meth)acrylamide und deren N-(Alkoxymethyl)- und (N-Acyloxymethyl)-Derivate, gamma-Acryl- und gamma-Methacryloxypropyltrialkoxysilane, Vinyltrialkoxysilane oder ethylenisch ungesättigte, carboxylgruppenhaltige Comonomere wie ethylenisch ungesättigten Mono- und Dicarbonsäuren oder hydroxygruppenhaltige Comonomere aus der Gruppe der Hydroxyalkylacrylate und der Hydroxyalkylmethacrylate enthalten.

4. Verwendung nach Anspruch 1 bis 3, **dadurch gekennzeichnet, dass** Vinylacetat/Vinylchlorid-, Vinylacetat/VeoVa9^{R}-, Methylmethacrylat/Butylacrylat-, Styrol/Butadien- und Styrol/Butylacrylat-Mischpolymerisate, welche jeweils 0.01 bis 25 Gew%, ein oder mehrere Monomereinheiten aus der Gruppe umfassend Acrylsäure, Methacrylsäure, Maleinsäure, Fumarsäure, Itaconsäure, Crotonsäure, Hydroxyethylacrylat, Hydroxyethylmethacrylat, Hydroxypropylacrylat enthalten zusammen mit Epoxidvernetzer vom Bisphenol-A-Typ eingesetzt.

5. Verwendung nach Anspruch 1 bis 4, **dadurch gekennzeichnet, dass** als textile Fasermaterialien solche auf der Basis von Aramidfasern, Carbonfasern, Glasfasern oder von Aramidfasern enthaltenden Mischfasern eingesetzt werden.

6. Verwendung nach Anspruch 1 bis 5, **dadurch gekennzeichnet, dass** die Pulver in einer Menge von 5 bis 50 g/m², bezogen auf das Fasergewicht, eingesetzt werden und die Flächengebilde bei einer Temperatur von 100°C bis 250°C und gegebenenfalls unter Druck, im allgemeinen von 0.5 bis 20 bar, verfestigt werden.

7. Verwendung nach Anspruch 1 bis 6, **dadurch gekennzeichnet, dass** die Fasern in Form von gewebten Textilien oder in Form von Nonwovens wie Gelegen oder Gewirken eingesetzt werden.

8. Verwendung nach Anspruch 1 bis 7, **dadurch gekennzeichnet, dass** die beschussfesten Fasermaterialien zur Herstellung von Schutzmatten oder zur Herstellung von Formkörpern für die innenseitige und aussenseitige Panzerung von Land-, Luft- und Seefahrzeugen verwendet werden.

9. Verwendung nach Anspruch 1 bis 7, **dadurch gekennzeichnet, dass** die beschussfesten Fasermaterialien zur Herstellung von Schutzpanzern und Schutzhelmen für den Personenschutz verwendet werden.

## Claims

1. Use of crosslinkable polymer powders for producing ballistic-resistant fibre materials, **characterized in that** it comprises consolidating the textile sheet materials by means of pulverulent crosslinkable interpolymers which are based on ethylenically unsaturated monomers and have a glass transition temperature Tg or a melting point of ≥ 40°C and a melt viscosity of ≥ 2000 mPas at 160°C to obtain binder particles distributed in particulate fashion on the fibre.

2. Use of Claim 1, **characterized in that** the interpolymers used are based on one or more monomers selected from the group consisting of vinyl esters of branched or unbranched alkylcarboxylic acids having 1 to 15 carbon atoms, methacrylic esters and acrylic esters of alcohols having 1 to 15 carbon atoms, vinylaromatics such as styrene, olefins such as ethylene and butadiene and also vinyl chloride and each contain 0.01 to 25% by weight, based on the total weight of the interpolymer, of crosslinkable functional comonomers.

3. Use of Claim 1 or 2, **characterized in that** the crosslinkable interpolymers contain functional comonomers selected from the group consisting of condensable comonomer units such as N-methylol-(meth)acrylamides and their N-(alkoxymethyl) and (N-acyloxymethyl) derivatives, gamma-acryloyl- and gamma-methacryloyl-oxypropyltrialkoxysilanes, vinyltrialkoxysilanes or ethylenically unsaturated carboxyl-containing comonomers such as ethylenically unsaturated mono- and dicarboxylic acids or hydroxyl-containing comonomers selected from the group consisting of the hydroxyalkyl acrylates and the hydroxyalkyl methacrylates.

4. Use of any of Claims 1 to 3, **characterized in that** vinyl acetate/vinyl chloride, vinyl acetate/VeoVa9^{R}-, methyl methacrylate/butyl acrylate, styrene/butadiene and styrene/butyl acrylate interpolymers which each contain 0.01 to 25% by weight of one or more monomer units selected from the group consisting of acrylic acid, methacrylic acid, maleic acid, fumaric acid, itaconic acid, crotonic acid, hydroxyethyl acrylate, hydroxyethyl methacrylate, hydroxypropyl acrylate [lacuna] used together with epoxide crosslinkers of the bisphenol A type.

5. Use of any of Claims 1 to 4, **characterized in that** the textile fibre materials used are based on aramid fibres, carbon fibres, glass fibres or fibre blends comprising aramid fibres.

6. Use of any of Claims 1 to 5, **characterized in that** the powders are used in an amount of 5 to 50 g/m², based on the fibre weight, and the sheet materials are consolidated at a temperature of 100°C to 250°C with or without pressure, in general from 0.5 to 20 bar.

7. Use of any of Claims 1 to 6, **characterized in that** the fibres are used in the form of woven textiles or in the form of nonwovens such as scrims or knits.

8. Use of any of Claims 1 to 7, **characterized in that** the ballistic-resistant fibre materials are used for producing protective mats or for producing shaped articles for the internal and external armouring of land-, air- and seacraft.

9. Use of any of Claims 1 to 7, **characterized in that** the ballistic-resistant fibre materials are used for producing protective armours and protective helmets for personal protection.

## Revendications

1. Utilisation de poudres de polymères réticulables pour la fabrication de matériaux fibreux pare-balles, **caractérisée en ce que** les structures planes textiles sont renforcées au moyen de copolymères réticulables, pulvérulents, de monomères à insaturation éthylénique, qui présentent une température de transition vitreuse Tv ou un point de fusion ≥ 40°C et une viscosité à chaud ≥ 2 000 mPa.s à 160°C, avec obtention de particules de liant particulaire réparties sur les fibres.

2. Utilisation selon la revendication 1, **caractérisée en ce qu'**on utilise en tant que copolymères ceux à base d'un ou plusieurs monomères choisis dans le groupe comprenant des esters vinyliques d'acides alkylcarboxyliques ramifiés ou non ramifiés ayant de 1 à 15 atomes de carbone, des esters d'acide méthacrylique et des esters d'acide acrylique avec des alcools ayant de 1 à 15 atomes de carbone, des composés vinylaromatiques tels que le styrène, des oléfines telles que l'éthylène et le butadiène, ainsi que le chlorure de vinyle, qui contiennent chacun de 0,01 à 25 % en poids, par rapport au poids total du copolymère, de comonomères fonctionnels réticulables.

3. Utilisation selon la revendication 1 ou 2, **caractérisée en ce que** les copolymères réticulables contiennent des comonomères fonctionnels choisis dans le groupe comprenant des unités comonomères condensables telles que des N-méthylol(méth)acrylamides et leurs dérivés N-alcoxyméthyle et N-acyloxyméthyle, des gamma-acryl- et gamma-méthacryloxypropyltrialcoxysilanes, des vinyltrialcoxysilanes ou des comonomères à insaturation éthylénique, contenant des groupes carboxy, tels que des acides mono- et dicarboxyliques à insaturation éthylénique ou des comonomères contenant des groupes hydroxy, choisis dans le groupe des acrylates d'hydroxyalkyle et des méthacrylates d'hydroxyalkyle.

4. Utilisation selon l'une quelconque des revendications 1 à 3, **caractérisée en ce qu'**on utilise, conjointement avec des agents de réticulation époxydes du type bisphénol-A, des copolymères acétate de vinyle/chlorure de vinyle, acétate de vinyle/VeoVa9^{R-}, méthacrylate de méthyle/acrylate de butyle, styrène/butadiène et styrène/acrylate de butyle, qui contiennent chacun de 0,01 à 25 % en poids d'une ou plusieurs unités monomères choisies dans le groupe comprenant l'acide acrylique, l'acide méthacrylique, l'acide maléique, l'acide fumarique, l'acide itaconique, l'acide crotonique, l'acrylate d'hydroxyéthyle, le méthacrylate d'hydroxyéthyle, l'acrylate d'hydroxypropyle.

5. Utilisation selon l'une quelconque des revendications 1 à 4, **caractérisée en ce qu'**on utilise comme matériaux fibreux textiles ceux à base de fibres aramide, fibres de carbone, fibres de verre ou de fibres mélangées contenant des fibres aramide.

6. Utilisation selon l'une quelconque des revendications 1 à 5, **caractérisée en ce qu'**on utilise les poudres en une quantité de 5 à 50 g/m², par rapport au poids des fibres, et les structures planes sont renforcées à une température de 100°C à 250°C et éventuellement sous pression, en général de 0,5 à 20 bars.

7. Utilisation selon l'une quelconque des revendications 1 à 6, **caractérisée en ce qu'**on utilise les fibres sous forme de textiles tissés ou sous forme de non-tissés tels que des nappes ou des tissus à mailles.

8. Utilisation selon l'une quelconque des revendications 1 à 7, **caractérisée en ce qu'**on utilise les matériaux fibreux pare-balles pour la fabrication de nattes de protection ou pour la fabrication de corps moulés pour le blindage interne ou externe de véhicules terrestres, d'aéronefs et de véhicules marins.

9. Utilisation selon l'une quelconque des revendications 1 à 7, **caractérisée en ce qu'**on utilise les matériaux fibreux pare-balles pour la fabrication de blindages de protection et de casques de sécurité pour la protection de personnes.
